# EUROPÄISCHE PATENTSCHRIFT

(11) **EP 4 223 561 B1**
(45) Veröffentlichungstag und Bekanntmachung des Hinweises auf die Patenterteilung: **30.04.2025**
(21) Anmeldenummer: 23150868.0
(22) Anmeldetag: 10.01.2023
(51) Int. Cl.: B60C 11/24, B60C 23/04

(54) **VERFAHREN ZUM ERMITTELN VON UNGLEICHMÄSSIGEM FAHRZEUGREIFENVERSCHLEISS**
METHOD FOR DETERMINING NON-UNIFORM VEHICLE TIRE WEAR
PROCÉDÉ DE DÉTERMINATION DE L'USURE IRRÉGULIÈRE D'UN PNEU DE VÉHICULE

(30) Priorität: 08.02.2022 DE 102022201283
(43) Veröffentlichungstag der Anmeldung: 09.08.2023
(73) Patentinhaber: Continental Reifen Deutschland GmbH, 30175 Hannover (DE)
(72) Erfinder: Sahlmüller, Baldo, 30165 Hannover (DE); Welser, Joachim, 30165 Hannover (DE); Lehn, Michael, 30165 Hannover (DE); Lerner, Christian, 30165 Hannover (DE)
(74) Vertreter: Continental Corporation

(56) Entgegenhaltungen:
- DE-A1- 102015 216 210
- JP-A- 2011 168 211
- JP-A- 2013 136 297
- US-A1- 2010 199 756
- US-A1- 2015 090 023
- US-A1- 2016 280 014

## Beschreibung

Die Erfindung betrifft ein Verfahren zum Ermitteln von ungleichmäßigem Fahrzeugreifenverschleiß mittels eines Beschleunigungssensors an einem Fahrzeugreifen. Weiterhin betrifft die Erfindung einen Fahrzeugreifen mit einem Beschleunigungssensor sowie ein System mit einem Fahrzeugreifen und ein Computerprogrammprodukt zum Ermitteln von ungleichmäßigem Fahrzeugreifenverschleiß.

Verfahren und Vorrichtungen zum Bestimmen von Reifenverschleiß mittels eines Beschleunigungssensors an einem Fahrzeugreifen sind bekannt. Die von Beschleunigungssensoren ausgegebenen radialen Beschleunigungswerte von Fahrzeugreifen werden hierzu nach der Zeit abgeleitet, so dass ein Reifenverschleiß und eine Profiltiefe bestimmt werden kann. Ist ein Fahrzeugreifen trotz einer zumindest teilweisen ausreichenden Profiltiefe aufgrund von weiteren Verschleißerscheinungen, wie einem erhöhten Verschleiß im Schulterbereich des Fahrzeugreifens, verschlissen, wird dies mit bekannten Verfahren nicht zuverlässig erkannt. Derartige Verfahren sind aus der JP 2013 136297 A, der JP 2011 168211 A und der US 2015/090023 A1 bekannt.

Vor diesem Hintergrund liegt der Erfindung die Aufgabe zugrunde, ein Verfahren sowie einen Fahrzeugreifen sowie ein System mit einem Fahrzeugreifen und ein Computerprogrammprodukt zum Bestimmen eines Reifenverschleißes derart auszuführen, dass ein verschlissener Fahrzeugreifen auch bei einer zumindest teilweisen ausreichenden Profiltiefe sicher erkannt werden kann.

Diese Aufgabe wird gelöst mit einem Verfahren gemäß den Merkmalen des Patentanspruches 1 sowie einem Fahrzeugreifen und einem System mit einem Fahrzeugreifen und einem Computerprogrammprodukt gemäß einem nebengeordneten Anspruch. Die Unteransprüche betreffen besonders zweckmäßige Weiterbildungen der Erfindung.

Erfindungsgemäß ist also ein Verfahren zum Ermitteln von ungleichmäßigem Fahrzeugreifenverschleiß, mit folgenden Schritten vorgesehen.

Erfassen von Messwerten einer Lateralbeschleunigung eines Messpunktes an einer Lauffläche eines Fahrzeugreifens, wobei die Lateralbeschleunigung mit einem Lateralbeschleunigungssensor gemessen wird. Unter Messwerte werden die mittels des Lateralbeschleunigungssensors gemessenen Messwerte oder vor Beginn des Verfahrens gespeicherte Messwerte verstanden, auch wenn diese beispielweise mittels Filter oder Algorithmen bearbeitet wurden. Unter Lateralbeschleunigung wird hierbei die Beschleunigung in Richtung der Achse des Reifens verstanden.

Auffinden von Peaks der Messwerte innerhalb eines Betrachtungsfensters, wobei Peakparameter der Peaks ermittelt werden. Ermittelte Peakparameter sind eine Peakhöhe und oder alternativ eine Peakdauer und oder alternativ ein relativer zeitlicher Abstand von Peaks zueinander und oder alternativ die Flankensteilheit der Peaks und oder alternativ die Fläche, die Peaks mit einer Referenzlinie einschließen.

Die Peakhöhe wird beispielweise im Verhältnis zu einer Referenzlinie, die eine Nulllinie sein kann, bestimmt. Unter Flankensteilheit wird die Steigung verstanden mit der ein Peak ansteigt oder abfällt. Als die Fläche die ein Peak mit einer Referenzlinie einschließt, wird bevorzugt die Fläche verstanden, die sich in der Zeitachse über die Dauer des Peaks erstreckt und sich in der Beschleunigungsachse über den Abstand der Messwerte zur Referenzlinie erstreckt.

Der relative zeitliche Abstand ergibt sich durch ein in ein Verhältnis setzen von dem zeitlichen Abstand zweier Peaks zur Winkelgeschwindigkeit des Fahrzeugreifens.

Die Winkelgeschwindigkeit des Fahrzeugreifens kann beispielsweise durch das ermitteln zweier gleichartigen Peaks, also beispielsweise zweier Peaks, die beim Einlaufen in den Reifenlatsch ermittelt werden, von zwei aufeinanderfolgenden Betrachtungsfenstern, bestimmt werden. Jedes in einen Reifenlatsch Eintreten des Messpunktes wird in einem einzelnen Betrachtungsfenster analysiert.

Die ermittelten Peakparameter werden mit gespeicherten Peakparametern verglichen. Wird eine Solldifferenz zwischen den ermittelten Peakparametern und den gespeicherten Peakparametern überschritten, wird eine Warnmeldung ausgegeben.

Ein ungleichmäßiger Fahrzeugreifenverschleiß kann somit ermittelt und ausgegeben werden. Folgebeschädigungen wie beispielsweise starker Luftverlust des Reifens und Unfälle können vermieden werden.

In einer vorteilhaften Ausführungsform kann ein ungleichmäßiger Fahrzeugreifenverschleiß in Form eines Reifenschulterverschleißes oder ein einseitiger Reifenverschleiß oder ein Reifenmittenverschleiß ermittelt werden. Derartige ungleichmäßige Fahrzeugreifenverschleiße treten vermehrt auf und erzeugen bei einer Auswertung von Messwerten häufig nur geringe Veränderungen von Peakausprägungen und sind mit Messwerten von radialen Beschleunigungssensoren schlecht zu identifizieren.

Es hat sich als vorteilhaft herausgestellt, dass die Peakdauer mittels der Dauer zwischen zwei Messwerten bestimmt wird. Es werden Messwerte gewählt, die einen bestimmten Anteil der Peakhöhe des Peaks entsprechen, bevorzugt 50% der Peakhöhe. Der Beginn und das Ende eines Peaks lässt sich regelmäßig nur ungenau bestimmen, sodass eine einfache Bestimmbarkeit der Peakdauer erreicht wird durch Wählen von Messwerten die einen bestimmten Anteil der maximalen Peakhöhe aufweisen. Besonders genau reproduzierbare Peakdauerbestimmungen haben sich bei der halben Peakhöhe ergeben.

Es hat sich als vorteilhaft herausgestellt, dass die Messwerte vor dem Auffinden der Peaks gefiltert werden, bevorzugt mit einem Tiefpassfilter. Ein Filtern der Messwerte, insbesondere das Herausfiltern von hochfrequenten Schwingungen, führt zu besser auswertbaren Messwerten.

Es hat sich weiterhin als vorteilhaft herausgestellt, dass die Peakparameter vor dem Ausgeben der Messwerte an eine Anzeigeeinheit ermittelt werden. Das Ermitteln der Peakparameter aus den Messwerten wird vorteilhafter Weise vor dem Ausgeben der Messwerte an eine Anzeigeeinheit durchgeführt, da hierdurch die Anzahl der zu übertragenden Daten verringert wird. Die Auswertung der Messwerte erfolgt am Lateralbeschleunigungssensor. Die Anzeigeeinheit befindet sich am Fahrzeug und zeigt die Warnmeldung unmittelbar dem Fahrzeugführer an oder sendet die Warnmeldung an eine fahrzeugexterne Vorrichtung und zeigt die Warnmeldung mittelbar über eine fahrzeugexterne Vorrichtung an.

Eine weitere bevorzugte Ausführungsform sieht vor, dass die Messwerte kabellos von einem Lateralbeschleunigungssensor an eine Anzeigeeinheit ausgegeben werden. Hierdurch wird eine besonders einfache Übertragung der Messwerte vom Lateralbeschleunigungssensor an eine Anzeigeeinheit ermöglicht.

Es hat sich als vorteilhaft herausgestellt, dass die Anzeigeeinheit die ermittelten Peakparameter mit gespeicherten Peakparametern vergleicht und die ermittelten Peakparameter und oder alternativ das Ergebnis des Vergleichs speichert. Das Durchführen des Vergleichs und dem Speichern der Daten mit der Anzeigeeinheit, ermöglicht es, den Lateralbeschleunigungssensor kompakt und günstig auszuführen. Weiterhin kann hierdurch der Speicher ausgelesen werden, auch wenn der Lateralbeschleunigungssensor aufgrund eines Fahrzeugstillstandes nicht aktiv ist.

Eine weitere bevorzugte Ausführungsform sieht vor, dass das Verfahren alle gespeicherten Messwerte und oder alternativ Peakparameter erzeugt, wobei erste Peakparameter nicht mit gespeicherten Peakparametern verglichen werden, wobei erste Peakparameter als Referenzparameter gespeichert werden. Die ersten Peakparameter werden zu Beginn des Verfahrens, also bei neuen Fahrzeugreifen erfasst. Die ersten Peakparameter sind als Referenzparameter geeignet, da der Fahrzeugreifen in diesem Zustand keinen ungleichmäßigen Fahrzeugreifenverschleiß aufweist. Unter erste Peakparameter wird bevorzugt auch eine Vielzahl von ersten Peakparametern verstanden, die beispielweise in Form eines Mittelwertes der einzelnen ersten Peakparameter als Referenzwerte gespeichert werden.

Gegenüber in anderer Weise ermittelten Referenzparametern hat das Verfahren den Vorteil, dass spezifische Eigenschaften eines einzelnen Reifens und daraus resultierende Abweichungen von Peakparametern nicht die Veränderung von Peakparametern durch ungleichmäßigen Fahrzeugreifenverschleiß überlagern.

Es hat sich als vorteilhaft herausgestellt, dass die Anzeigeeinheit eine Warnmeldung an einen Fahrzeugführer und/oder eine fahrzeugexterne Einheit ausgibt. Ein Ausgeben der Warnmeldung an den Fahrzeugführer ermöglicht es in einfacher Weise den Fahrzeugführer über den ungleichmäßigen Fahrzeugreifenverschleiß zu informieren. Insbesondere im Flottenbetrieb ist jedoch eine zentrale Ausgabe der Warnmeldung über eine fahrzeugexterne Einheit vorteilhaft.

Erfindungsgemäß ist ein Fahrzeugreifen mit einer Lauffläche, bevorzugt mit einer Profilstruktur, einer Karkasslage, einem Reifengürtel, einer Reifeninnenseite und Seitenwänden vorgesehen. An der Lauffläche ist ein Lateralbeschleunigungssensor mit einer Sendeeinheit angeordnet, wobei der Lateralbeschleunigungssensor dazu eingerichtet ist, die Lateralbeschleunigung des Fahrzeugreifens während einer Fahrt zu messen und bevorzugt Peaks der Messwerte innerhalb eines Betrachtungsfensters aufzufinden. Der Lateralbeschleunigungssensor ist dazu eingerichtet, Peakparameter zu bestimmen. Peakparameter sind eine Peakhöhe und oder alternativ eine Peakdauer und/oder alternativ relative zeitliche Abstände der Peaks zueinander und/oder alternativ die Flankensteilheit der Peaks und/oder alternativ die Fläche, die Peaks mit einer Referenzlinie einschließen. Der relative zeitliche Abstand wird durch ein in ein Verhältnis setzen von dem zeitlichen Abstand zweier Peaks zur Winkelgeschwindigkeit des Fahrzeugreifens bestimmt.

Ein ungleichmäßiger Fahrzeugreifenverschleiß kann somit ermittelt und ausgegeben werden. Folgebeschädigungen wie beispielsweise starker Luftverlust des Reifens und Unfälle können vermieden werden.

Eine bevorzugte Ausführungsform sieht vor, dass der Lateralbeschleunigungssensor an der Reifeninnenseite der Lauffläche, bevorzugt auf der Reifeninnenseite, sowie in einem mittig angeordneten Bereich zu den Seitenwänden angeordnet ist. Eine derartige Anordnung des Lateralbeschleunigungssensors ermöglicht das Erfassen von besonders aussagekräftigen Messwerten.

Erfindungsgemäß ist ein System zum Ermitteln eines ungleichmäßig verschlissenen Fahrzeugreifens und zur Ausgabe einer Warnmeldung, zum Ausführen des erfindungsgemäßen Verfahrens vorgesehen.

Das System weist einen Lateralbeschleunigungssensor zum Ermitteln von Messwerten einer lateralen Beschleunigung einer Lauffläche eines Fahrzeugreifens auf sowie eine Sendeeinheit zum Senden der Messwerte von dem Lateralbeschleunigungssensor an eine Anzeigeeinheit.

Die Anzeigeeinheit ist zum Ausgeben einer Warnmeldung vorgesehen, wobei die Anzeigeeinheit beispielweise am Fahrzeug angeordnet ist. Es ist eine Prozessoreinheit zum Auffinden von Peaks und Ermitteln von Peakparametern und zum Vergleichen der ermittelten Peakparameter mit gespeicherten Peakparametern vorgesehen. Eine Speichereinheit ist zum Speichern der Peakparameter und oder alternativ des Ergebnisses des Vergleichs vorgesehen.

Erfindungsgemäß ist ein Fahrzeug aufweisend einen erfindungsgemäßen Fahrzeugreifen vorgesehen, der dazu eingerichtet ist, mit einer Anzeigeeinheit und einer Speichereinheit ein erfindungsgemäßes Verfahren durchzuführen.

Erfindungsgemäß ist ein Computerprogrammprodukt zum Ermitteln eines verschlissenen Fahrzeugreifens eines Fahrzeugs vorgesehen, umfassend Befehle, die bei der Ausführung des Programms durch zumindest eine Prozessoreinheit diese veranlasst das erfindungsgemäße Verfahren auszuführen.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in
Fig. 1 einen Fahrzeugreifen mit Lateralbeschleunigungssensor;
Fig. 2 einen Vergleich lateraler Beschleunigungen einer Lauffläche von gleichmäßig verschlissenen Fahrzeugreifen zu Fahrzeugreifen mit Reifenschulterverschleiß;
Fig. 3 einen Vergleich lateraler Beschleunigungen einer Lauffläche von gleichmäßig verschlissenen Fahrzeugreifen zu Fahrzeugreifen mit einseitigem Verschleiß.

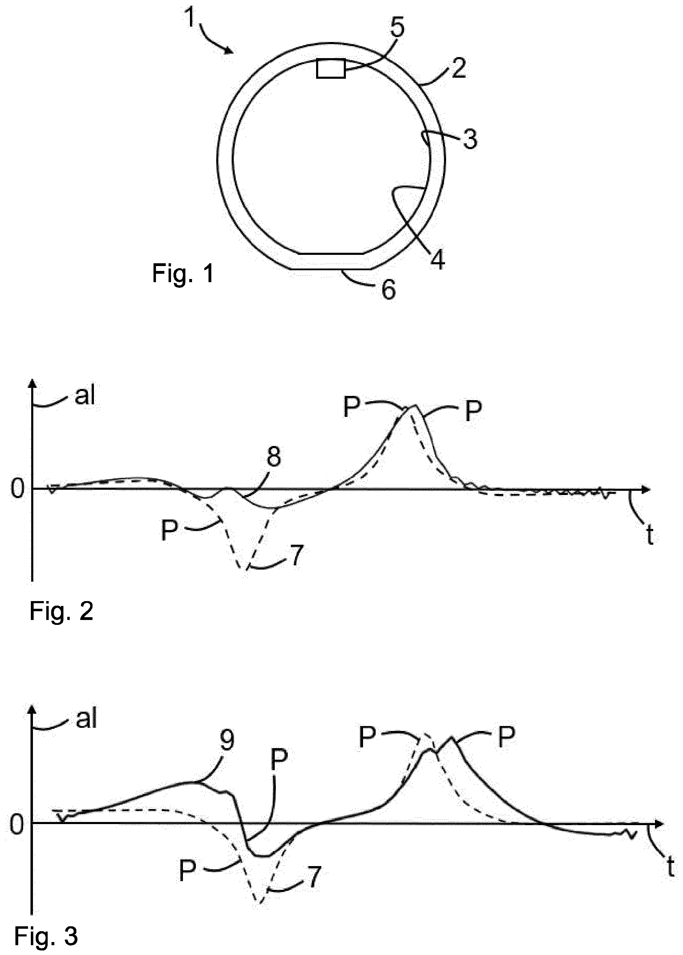

Figur 1 zeigt einen Fahrzeugreifen 1 mit einer Lauffläche 2, einer Reifeninnenseite 3 und einem Innerliner 4, die einen Lateralbeschleunigungssensor 5 aufnimmt. Der Lateralbeschleunigungssensor 5 weist einen Beschleunigungssensor sowie eine Prozessoreinheit und eine Sendeeinheit auf, um Messwerte zu erfassen, zu verarbeiten und an eine sich am Fahrzeug befindenden Anzeigeeinheit zu senden.

Nähert sich bei einem abrollenden Fahrzeugreifen 1 ein Punkt der Lauffläche 2 und des Innerliners 4 dem Untergrund an, befindet sich der Punkt der Lauffläche 2 im Bereich eines Reifenlatsches 6. Der Reifenlatsch 6 ist ein überwiegend ebener Bereich des Fahrzeugreifens 1, der Abstand in diesem Bereich zur Rotationsachse des Fahrzeugreifens 1 ist verringert. Der Fahrzeugreifen 1 erfährt daher am Innerliner 4 beim Einlaufen in den Reifenlatsch 6 und Auslaufen aus dem Reifenlatsch 6 eine laterale Beschleunigung.

Die laterale Beschleunigung von Laufflächen 2 ist für einen Bereich, einem Betrachtungsfensters, in Figur 2 dargestellt. Auf der t-Achse t ist die Zeit aufgetragen, auf der aₗ-Achse aₗ ist die laterale Beschleunigung von Punkten am Innerliner 4 des Fahrzeugreifens 1 dargestellt.

Die gestrichelte Linie 7 stellt die laterale Beschleunigung am Innerliner 4 eines gleichmäßig verschlissenen Fahrzeugreifen 1 im Bereich des Reifenlatsches 6 dar. Zu Beginn des Betrachtungsfensters, links dargestellt, ist die laterale Beschleunigung geringfügig positiv. Sie fällt dann in Form eines Peaks P stark auf einen Minimalwert ab und nähert sich folgend einer lateralen Beschleunigung von etwa Null an. Beim Verlassen des Reifenlatsches 6 steigt die laterale Beschleunigung in Form eines Peaks P stark auf einen Maximalwert an, um sich folgend dem Nullwert anzunähern.

Die durchgezogene Linie 8 stellt die laterale Beschleunigung am Innerliner 4 eines Fahrzeugreifens 1 im Bereich des Reifenlatsches 6 da, wobei der Fahrzeugreifen 1 einen Reifenschulterverschleiß aufweist. Im Vergleich zur gestrichelten Linie 7 ist im Bereich des ersten Peaks P der gestrichelten Linie 7 ersichtlich, dass die durchgezogene Linie 8 in diesem Bereich keinen derart ausgeprägten Peak P aufweist. Vielmehr weist die durchgezogene Linie 8 zwei schwächer ausgeprägte Minimalwerte auf. Im Bereich des zweiten Peaks P der gestrichelten Linie 7 weist die durchgezogene Linie 8 ebenfalls einen Peak P auf, der seinen Höchstwert jedoch zu einem späteren Zeitpunkt erreicht. Die durchgezogene Linie 8 nähert sich dann auch einem Nullwert an.

In Figur 3 ist eine weitere laterale Beschleunigung am Innerliner 4 für ein Betrachtungsfenster dargestellt. Die gestrichelte Linie 7 entspricht der gestrichelten Linie 7 der Figur 2 und stellt die laterale Beschleunigung am Innerliner 4 eines gleichmäßig verschlissenen Fahrzeugreifens 1 dar. Die durchgezogene Linie 9 steht für eine Beschleunigung am Innerliner 4 mit einem einseitigen Reifenverschleiß. Die durchgezogene Linie 9 verläuft im Bereich vor dem ersten Peak P der gestrichelten Linie 7 oberhalb der gestrichelten Linie 7. Die durchgezogene Linie 9 weist weiterhin ein deutlich weniger ausgeprägten negativen Peak P auf. Der positive Peak P der durchgezogenen Linie 9 weist im Vergleich eine deutlich erhöhte Fläche zur Nulllinie auf. Weiterhin ist der Peak P zu einem späteren Zeitpunkt hin verschoben.

### Bezugszeichenliste

- 1: Fahrzeugreifen
- 2: Lauffläche
- 3: Reifeninnenseite
- 4: Innerliner
- 5: Lateralbeschleunigungssensor

- 6: Reifenlatsch
- 7: gestrichelte Linie
- 8: durchgezogene Linie
- 9: durchgezogene Linie

- aₗ: aₗ-Achse
- P: Peak
- t: t-Achse

## Patentansprüche

1. Verfahren zum Ermitteln von ungleichmäßigem Fahrzeugreifenverschleiß, mit den Schritten:
- Erfassen von Messwerten einer Lateralbeschleunigung eines Messpunktes am Innerliner (4) eines Fahrzeugreifens (1) mittels eines Lateralbeschleunigungssensors (5),
- Auffinden von Peaks (P) der Messwerte durch den Lateralbeschleunigungssensor (5), wobei mittels des Lateralbeschleunigungssensors (5) Peakparameter und zwar eine Peakhöhe und/oder eine Peakdauer und/oder ein relativer zeitlicher Abstand von Peaks zueinander, wobei der relative zeitliche Abstand durch ein in ein Verhältnis setzen von dem zeitlichen Abstand zweier Peaks (P) zur Winkelgeschwindigkeit des Fahrzeugreifens (1) bestimmt wird, und/oder die Flankensteilheit der Peaks und/oder die Fläche, die Peaks mit einer Referenzlinie einschließen, ermittelt werden
- Vergleichen der ermittelten Peakparameter mit gespeicherten Peakparametern,
- Ausgeben einer Warnmeldung beim Überschreiten einer Solldifferenz zwischen den ermittelten Peakparametern und den gespeicherten Peakparametern.

2. Verfahren nach Anspruch 1, **dadurch gekennzeichnet, dass** der ungleichmäßige Fahrzeugreifenverschleiß ein Reifenschulterverschleiß oder ein einseitiger Fahrzeugreifenverschleiß (1) oder ein Reifenmittenverschleiß ist.

3. Verfahren nach den Ansprüchen 1 oder 2, **dadurch gekennzeichnet, dass** für den Fall wonach eine Peakdauer ermittelt wird, die Peakdauer mittels der Dauer zwischen zwei Messwerten bestimmt wird, wobei Messwerte gewählt werden, die einem bestimmten Anteil der Peakhöhe des Peaks (P) entsprechen,und zwar 50% der Peakhöhe.

4. Verfahren nach einem der vorangehenden Ansprüche, **dadurch gekennzeichnet, dass** die Messwerte vor dem Auffinden der Peaks (P) gefiltert werden, bevorzugt mit einem Tiefpassfilter.

5. Verfahren nach einem der vorangehenden Ansprüche, **dadurch gekennzeichnet, dass** die Peakparameter vor dem Ausgeben der Messwerte an eine Anzeigeeinheit ermittelt werden.

6. Verfahren nach einem der vorangehenden Ansprüche, **dadurch gekennzeichnet, dass** die Messwerte kabellos von einem Lateralbeschleunigungssensor (4) an eine Anzeigeeinheit ausgegeben werden.

7. Verfahren nach Anspruch 6, **dadurch gekennzeichnet, dass** die Anzeigeeinheit die ermittelten Peakparameter mit gespeicherten Peakparametern vergleicht und die ermittelten Peakparameter und/oder das Ergebnis des Vergleichs speichert.

8. Verfahren nach einem der vorangehenden Ansprüche, **dadurch gekennzeichnet, dass** das Verfahren alle gespeicherten Messwerte und/oder Peakparameter erzeugt, wobei erste Peakparameter nicht mit gespeicherten Peakparametern verglichen werden, wobei erste Peakparameter als Referenzparameter gespeichert werden.

9. Verfahren nach einem der vorangehenden Ansprüche, **dadurch gekennzeichnet, dass** die Anzeigeeinheit eine Warnmeldung an einen Fahrzeugführer und/oder eine fahrzeugexterne Einheit ausgibt.

10. Fahrzeugreifen (1) mit einer Lauffläche (2), bevorzugt mit einer Profilstruktur, einer Karkasslage, einem Reifengürtel, einer Reifeninnenseite (3), einem Innerliner (4) und Seitenwänden, wobei an der Lauffläche (2) ein Lateralbeschleunigungssensor (5) mit einer Sendeeinheit angeordnet ist, wobei der Lateralbeschleunigungssensor (5) eingerichtet ist, die Lateralbeschleunigung des Fahrzeugreifens (1) während einer Fahrt zu messen **dadurch gekennzeichnet, dass** der Lateralbeschleunigungssensor (5) eingerichtet ist, Peaks (P) der Messwerte aufzufinden, wobei der Lateralbeschleunigungssensor (4) dazu eingerichtet ist Peakparameter und zwar eine Peakhöhe und/oder eine Peakdauer und/oder relative zeitliche Abstände der Peaks (P) zueinander, wobei der relative zeitliche Abstand durch ein in ein Verhältnis setzen von dem zeitlichen Abstand zweier Peaks (P) zur Winkelgeschwindigkeit des Fahrzeugreifens (1) bestimmt wird, und/oder die Flankensteilheit der Peaks (P) und/oder die Fläche, die Peaks (P) mit einer Referenzlinie einschließen, zu ermitteln.

11. Fahrzeugreifen (1) nach Anspruch 10, **dadurch gekennzeichnet, dass** der Lateralbeschleunigungssensor (4) an der Reifeninnenseite (3) der Lauffläche (2), bevorzugt auf der Reifeninnenseite (3), sowie in einem relativ zu den Seitenwänden mittig angeordneten Bereich angeordnet ist.

12. System zum Ermitteln eines ungleichmäßig verschlissenen Fahrzeugreifens (1) und zur Ausgabe einer Warnmeldung, zum Ausführen des Verfahrens nach Anspruch 1, aufweisend:
- einen Lateralbeschleunigungssensor (4) zum Ermitteln von Messwerten einer lateralen Beschleunigung einer Lauffläche (2) eines Fahrzeugreifens (1), aufweisend eine Sendeeinheit zum Senden der Messwerte von dem Lateralbeschleunigungssensor (4) an eine Anzeigeeinheit,
- Anzeigeeinheit zum Ausgeben einer Warnmeldung, die insbesondere am Fahrzeug angeordnet ist,
- eine Prozessoreinheit zum Auffinden von Peaks (P) und Ermitteln von Peakparametern und zum Vergleichen der ermittelten Peakparameter mit gespeicherten Peakparametern,
- eine Speichereinheit zum Speichern der Peakparameter und/oder des Ergebnisses des Vergleichs.

13. Fahrzeug aufweisend einen Fahrzeugreifen (1) nach Anspruch 10, der dazu eingerichtet ist, mit einer Anzeigeeinheit und einer Speichereinheit ein Verfahren nach Anspruch 1 durchzuführen.

14. Computerprogrammprodukt zum Ermitteln eines verschlissenen Fahrzeugreifens (1) eines Fahrzeugs, umfassend Befehle, die bei der Ausführung des Programms durch zumindest eine Prozessoreinheit diese veranlasst das Verfahren nach Anspruch 1 auszuführen.

## Claims

1. Method for determining uneven vehicle tyre wear, having the steps of:
- recording measured values of a lateral acceleration of a measurement point on the inner liner (4) of a vehicle tyre (1) by means of a lateral acceleration sensor (5),
- finding peaks (P) of the measured values by means of the lateral acceleration sensor (5), wherein the lateral acceleration sensor (5) is used to determine peak parameters, namely a peak height and/or a peak duration and/or a relative time interval between peaks, wherein the relative time interval is determined by relating the time interval between two peaks (P) to the angular velocity of the vehicle tyre (1), and/or the edge steepness of the peaks and/or the area enclosed by the peaks with a reference line,
- comparing the determined peak parameters with stored peak parameters,
- outputting a warning message when a setpoint difference between the determined peak parameters and the stored peak parameters is exceeded.

2. Method according to Claim 1, **characterized in that** the uneven vehicle tyre wear is tyre shoulder wear or one-sided vehicle tyre wear (1) or tyre centre wear.

3. Method according to Claim 1 or 2, **characterized in that**, when a peak duration is determined, the peak duration is determined by means of the duration between two measured values, wherein measured values which correspond to a certain proportion of the peak height of the peak (P), namely 50% of the peak height, are selected.

4. Method according to one of the preceding claims, **characterized in that** the measured values are filtered prior to finding the peaks (P), preferably with a low pass filter.

5. Method according to one of the preceding claims, **characterized in that** the peak parameters are determined prior to outputting the measured values to a display unit.

6. Method according to one of the preceding claims, **characterized in that** the measured values are output wirelessly from a lateral acceleration sensor (4) to a display unit.

7. Method according to Claim 6, **characterized in that** the display unit compares the determined peak parameters with stored peak parameters and stores the determined peak parameters and/or the result of the comparison.

8. Method according to one of the preceding claims, **characterized in that** the method generates all stored measured values and/or peak parameters, wherein first peak parameters are not compared with stored peak parameters, wherein first peak parameters are stored as reference parameters.

9. Method according to one of the preceding claims, **characterized in that** the display unit outputs a warning message to a vehicle driver and/or a unit outside the vehicle.

10. Vehicle tyre (1) having a tread (2), preferably with a profile structure, a carcass ply, a tyre belt, a tyre inner side (3), an inner liner (4) and side walls, wherein a lateral acceleration sensor (5) with a transmitting unit is arranged on the tread (2), wherein the lateral acceleration sensor (5) is configured to measure the lateral acceleration of the vehicle tyre (1) during a journey, **characterized in that** the lateral acceleration sensor (5) is configured to find peaks (P) of the measured values, wherein the lateral acceleration sensor (4) is configured to determine peak parameters, namely a peak height and/or a peak duration and/or relative time intervals between the peaks (P), wherein the relative time interval is determined by relating the time interval between two peaks (P) to the angular velocity of the vehicle tyre (1), and/or the edge steepness of the peaks (P) and/or the area enclosed by the peaks (P) with a reference line.

11. Vehicle tyre (1) according to Claim 10, **characterized in that** the lateral acceleration sensor (4) is arranged on the tyre inner side (3) of the tread (2), preferably on the tyre inner side (3), and in a region arranged centrally relative to the side walls.

12. System for determining an unevenly worn vehicle tyre (1) and for outputting a warning message, for carrying out the method according to Claim 1, comprising:
- a lateral acceleration sensor (4) for determining measured values of a lateral acceleration of a tread (2) of a vehicle tyre (1), comprising a transmitting unit for transmitting the measured values from the lateral acceleration sensor (4) to a display unit,
- a display unit for outputting a warning message, which is arranged in particular on the vehicle,
- a processor unit for finding peaks (P) and determining peak parameters and for comparing the determined peak parameters with stored peak parameters,
- a storage unit for storing the peak parameters and/or the result of the comparison.

13. Vehicle comprising a vehicle tyre (1) according to Claim 10, which is configured to carry out a method according to Claim 1 with a display unit and a storage unit.

14. Computer program product for determining a worn vehicle tyre (1) of a vehicle, comprising instructions which, when the program is executed by at least one processor unit, causes the latter to carry out the method according to Claim 1.

## Revendications

1. Procédé de détermination de l'usure irrégulière d'un pneu de véhicule, comprenant les étapes suivantes :
- détection de valeurs de mesure d'une accélération latérale d'un point de mesure sur la gomme interne (4) d'un pneu de véhicule (1) au moyen d'un capteur d'accélération latérale (5),
- détection de pics (P) des valeurs de mesure par le capteur d'accélération latérale (5), des paramètres de pic, à savoir une hauteur de pic et/ou une durée de pic et/ou un écart temporel relatif entre les pics étant déterminés au moyen du capteur d'accélération latérale (5), l'écart temporel relatif étant déterminé en mettant en relation l'écart temporel de deux pics (P) avec la vitesse angulaire du pneu de véhicule (1), et/ou en déterminant la pente des flancs des pics et/ou la surface que les pics délimitent avec une droite de référence
- comparaison des paramètres de pic déterminés avec des paramètres de pic mémorisés,
- fourniture en sortie d'un message d'avertissement en cas de dépassement d'une différence de consigne entre les paramètres de pic déterminés et les paramètres de pic mémorisés.

2. Procédé selon la revendication 1, **caractérisé en ce que** l'usure irrégulière du pneu de véhicule est une usure de l'épaulement du pneu ou une usure unilatérale du pneu de véhicule (1) ou une usure du centre du pneu.

3. Procédé selon les revendications 1 ou 2, **caractérisé en ce que**, dans le cas où une durée de pic est déterminée, la durée de pic est déterminée au moyen de la durée entre deux valeurs de mesure, les valeurs de mesure choisies correspondant à une proportion déterminée de la hauteur de pic du pic (P), à savoir 50 % de la hauteur de pic.

4. Procédé selon l'une des revendications précédentes, **caractérisé en ce que** les valeurs de mesure sont filtrées avant la détection des pics (P), de préférence à l'aide d'un filtre passe-bas.

5. Procédé selon l'une des revendications précédentes, **caractérisé en ce que** les paramètres de pic sont déterminés avant la fourniture en sortie des valeurs de mesure à une unité d'affichage.

6. Procédé selon l'une des revendications précédentes, **caractérisé en ce que** les valeurs de mesure sont fournies en sortie sans fil par un capteur d'accélération latérale (4) à une unité d'affichage.

7. Procédé selon la revendication 6, **caractérisé en ce que** l'unité d'affichage compare les paramètres de pic déterminés à des paramètres de pic mémorisés et mémorise les paramètres de pic déterminés et/ou le résultat de la comparaison.

8. Procédé selon l'une des revendications précédentes, **caractérisé en ce que** le procédé génère toutes les valeurs de mesure et/ou tous les paramètres de pic mémorisés, les premiers paramètres de pic n'étant pas comparés à des paramètres de pic mémorisés, les premiers paramètres de pic étant mémorisés en tant que paramètres de référence.

9. Procédé selon l'une des revendications précédentes, **caractérisé en ce que** l'unité d'affichage fournit en sortie un message d'avertissement à un conducteur de véhicule et/ou à une unité extérieure au véhicule.

10. Pneu de véhicule (1) comprenant une bande de roulement (2), comportant de préférence une structure de profil, une couche de carcasse, une ceinture de pneu, une face interne de pneu (3), une gomme interne (4) et des parois latérales, un capteur d'accélération latérale (5) doté d'une unité d'émission étant disposé sur la bande de roulement (2), le capteur d'accélération latérale (5) étant conçu pour mesurer l'accélération latérale du pneu de véhicule (1) pendant un trajet, **caractérisé en ce que** le capteur d'accélération latérale (5) est conçu pour détecter des pics (P) des valeurs de mesure, le capteur d'accélération latérale (4) étant conçu pour déterminer des paramètres de pic, à savoir une hauteur de pic et/ou une durée de pic et/ou des écarts temporels relatifs entre les pics (P), l'écart temporel relatif étant déterminé en mettant en relation l'écart temporel de deux pics (P) avec la vitesse angulaire du pneu de véhicule (1), et/ou en déterminant la pente des flancs des pics (P) et/ou la surface que les pics (P) délimitent avec une droite de référence.

11. Pneu de véhicule (1) selon la revendication 10, **caractérisé en ce que** le capteur d'accélération latérale (4) est disposé sur la face interne (3) de la bande de roulement (2), de préférence sur la face interne (3) du pneu, ainsi que dans une zone disposée au centre par rapport aux parois latérales.

12. Système de détermination de l'usure irrégulière d'un pneu de véhicule (1) et de fourniture en sortie d'un message d'avertissement, pour la mise en œuvre du procédé selon la revendication 1, comportant :
- un capteur d'accélération latérale (4) destiné à déterminer des valeurs de mesure d'une accélération latérale d'une bande de roulement (2) d'un pneu de véhicule (1), comportant une unité d'émission destinée à envoyer les valeurs de mesure du capteur d'accélération latérale (4) à une unité d'affichage,
- une unité d'affichage destinée à fournir en sortie un message d'avertissement, laquelle est disposée en particulier sur le véhicule,
- une unité de traitement destinée à détecter des pics (P) et à déterminer des paramètres de pic, et à comparer les paramètres de pic déterminés à des paramètres de pic mémorisés,
- une unité à mémoire destinée à mémoriser les paramètres de pic et/ou le résultat de la comparaison.

13. Véhicule comportant un pneu de véhicule (1) selon la revendication 10, qui est conçu pour mettre en œuvre un procédé selon la revendication 1 à l'aide d'une unité d'affichage et d'une unité à mémoire.

14. Programme informatique de détermination de l'usure d'un pneu de véhicule (1), comprenant des instructions qui, lors de l'exécution du programme par au moins une unité de traitement, amènent cette dernière à mettre en œuvre le procédé selon la revendication 1.
